**Europäisches Patentamt**

**European Patent Office**

**Office européen des brevets**

(19)

(11) **EP 1 599 046 A1**

(12) **EUROPEAN PATENT APPLICATION**

(43) Date of publication:
**23.11.2005 Bulletin 2005/47**

(51) Int Cl.$^7$: **H04N 7/26**

(21) Application number: **04291291.5**

(22) Date of filing: **19.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Thomson Licensing**
**92100 Boulogne (FR)**

(72) Inventors:
• **Vieron, Jérome**
**92648 Boulogne cedex (FR)**

• **Boisson, Guillaume**
**92648 Boulogne cedex (FR)**
• **Le Corre, Harold**
**92648 Boulogne cedex (FR)**

(74) Representative: **Benezeth, Philippe J.L. M.**
**Thomson,**
**European Patent Operations,**
**46, quai Alphonse Le Gallo**
**92648 Boulogne (FR)**

(54) **Method for coding video data of a sequence of pictures**

(57)     The method comprising a temporal analysis (1) implementing a motion compensated temporal filtering, said filtering comprising, to get a high frequency band picture H (9, 14) at a temporal level I, a predict step implementing high pass filtering of pictures L (7, 8; 11, 12, 13) of lower temporal level, and, to get a low frequency band picture L (10, 16) at a temporal level I, an update step implementing low pass filtering of pictures H (9; 14, 15) of same level and/or of pictures L (7, 11) of lower temporal level, is characterized in that, at least for a temporal level, a predict step carries out a long filtering and an update step carries out a short filtering.

Applications relate to video compression for transmission or storage of data.

FIG. 1

EP 1 599 046 A1

**Description**

The invention relates to a method and device for coding and decoding video data of a sequence of pictures. In particular, the invention relates to a temporal analysis implementing motion compensated temporal filtering.

In most of the current video coding algorithms, such as MPEG and/or t+2D wavelet based schemes, the first step consists in exploiting temporal correlation between successive frames, after what, the frame spatial correlation can be captured. Temporal redundancy is reduced using motion compensation transforms. This is known as Motion Compensated Temporal Filtering or MCTF. The spatial redundancy is reduced using spatial transform like for instance Discrete Cosine Transform or Discrete Wavelet Transform.

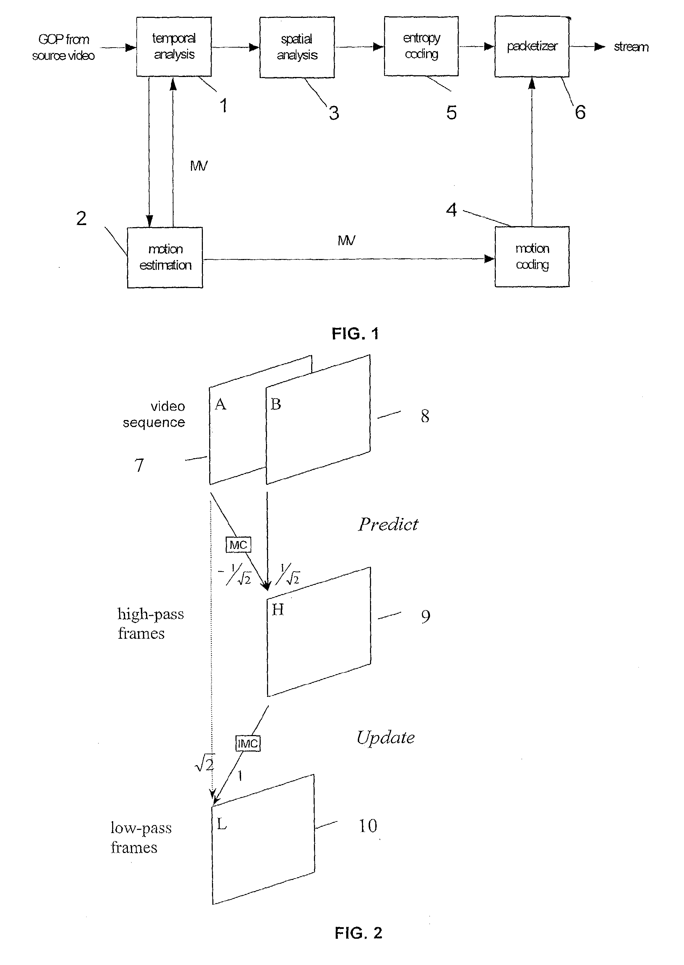

Figure 1 shows a known structure of a video encoding scheme. Prior to encoding, consecutive video frames are usually divided into groups of frames also known under the acronym GOF. The coding process is based on the following structure :

First a motion-compensated temporal analysis or MCTF circuit 1 achieves such a filtering to get the different temporal frequency bands. A motion estimation circuit 2 receives the frames from the temporal analysis circuit to calculate the motion estimation (ME). Motion estimation generates motion vectors (MV), which are used in order to minimize the amount of data to be transmitted when an object moves its position in one picture relative to another picture. Motion estimation uses either forward or backward or bi-directional referencing. Motion vectors are transmitted to the temporal analysis circuit which performs the motion compensation. They are also transmitted to a motion coding circuit 4 to be encoded before transmission.

The resulting "frames" from the temporal analysis circuit 1 are processed through a spatial analysis circuit 3 implementing a Discrete Wavelet Transform (DWT). Coefficients resulting from the complete temporal/spatial analysis are finally encoded using an entropy coder 5. A final merger circuit, packetizer 6, concatenates the resulting encoded coefficient and motion vectors to get the final output stream.

Motion Compensated Temporal Filtering techniques analyse, i.e. filter, sets of n successive video frames and produce subsets of temporal low frequency frames and high frequency frames and associated motion fields, i.e. set of motion vectors between the filtered sets of *n* frames.

Discrete Wavelet Transform (DWT), a known analysis technique, is an iterative method for breaking a signal or a series of values into spectral components, by taking averages and differences of values. Thereby it is possible to view the series of values in different resolutions corresponding to frequencies, or subbands of the spectrum.

The implementation of such a temporal filtering can be done either by a classical convolutive method or using the so-called "lifting scheme". The latter method is commonly used due to its flexibility, reversibility, fastness, and low memory usage. An elementary lifting stage is the sequence of a "predict" step and an "update" step. A complete lifting scheme consists of one or several elementary lifting stages.

Short temporal filtering, i.e. 2-tap filters, that only applies on pair of frames, is widely used in video compression. But its compaction power is quite limited in comparison with longer filter-bank, such as the currently used 5/3 filfier-bank. Nevertheless, such temporal structure can bring memory/delay problems. Indeed, in comparison with Haar filtering, the bi-directional predict step and update step, described below, are responsible for a growing encoding/ decoding delay and memory space. For instance, in order to encode/decode a group of 16 Frames, a total amount of 56 frames must be kept in memory. Due to the buffering time of the "future" frames, it implies an encoding delay of 0.5 second in case of 30 fps (frames per second) video material. As well, the same latency happens before the decoding. Such delays can not fulfill requirements of applications needing a short reaction time or disposing of reduced memory capacity. Last, the implementation of such a temporal pyramid is quite complex.

It has been recognized that the update step is mostly responsible for the increase of the overall encoding/ decoding latency. Among the techniques proposed to reduce that delay, skipping update step has already been investigated as described by L. Luo and al in "Motion compensated lifting wavelet and its application in video coding" Proceedings of IEEE International Conference on Image Processing, ICIP'01, Thessaloniki, Greece, October 2001. Moreover, Woods proposed in "Motion compensated temporal filtering using longer filters", ISO/IEC JTC1/SC29/WG11/M9280, Awaji, Japan, Dec.2002, to use the Haar filter at the highest temporal level, reducing consequently the size of the temporal pyramid.

But systematically skipping update step can damaged the compaction along the temporal axis. For instance, using the 5/3 filtering without update step, so-called "truncated 5/3" scheme, comes down to using a 1/3 filter-bank. On the other hand, Woods technique only answers to a limited part of described problems.

An aim of our invention is to alleviate the aforesaid drawbacks.

Its subject is a method for coding video data of a sequence of pictures comprising a temporal analysis implementing a motion compensated temporal filtering, said filtering comprising, to get a high frequency band picture H at a temporal level I, a predict step implementing high pass filtering of pictures L of lower temporal level, and, to get a low frequency band picture L at a temporal level I, an update step implementing low pass filtering of pictures H of same level and/or of pictures L of lower temporal level, characterized in that, at least for a temporal level, a predict step carries out a long filtering and an update step carries out a short filtering.

According to a mode of implementation, the selection among long filtering and short filtering, for predict and up-date steps, is made as a function of the temporal level I.

According to a mode of implementation, a long filtering corresponds to a bi-directional filtering mode and a short filtering mode corresponds to a right-hand filtering mode, a left-hand filtering mode picture or a no-filtering mode.

According to a mode of implementation, the selection among long filtering and short filtering, for predict and up-date steps, is made as a function of the time position t.

According to a mode of implementation, the sequence is structured into groups of frames or GOFs and, for a given temporal level, for the predict and/or the up-date step and for a given GOF, the right-hand mode is selected for the first frame in said GOF, the left-hand mode is selected for the last frame in said GOF, the bi-directional mode is selected for the other frames.

According to a mode of implementation, the bidirectionnal mode is systematically used at the n lowest levels of the L temporal levels and the selection is made at the upper temporal levels.

The invention also relates to a device for the coding of video data, comprising a temporal analysis circuit to perform MCTF filtering of pictures, characterized in that said circuit comprises means for performing, for a temporal level and for a predict step, a long filtering and, for same temporal level and for an update step, a short filtering.

The invention also relates to a method for decoding video data, comprising a temporal synthesis motion compensated temporal filtering, characterized in that, for a temporal level and for an update step, said filtering carries out a short filtering and, for same temporal level and for a predict step, said filtering carries out a long filtering.

According to a mode of implementation, a long filtering corresponds to a bi-directional filtering mode and a short filtering mode corresponds to a right-hand filtering mode, a left-hand filtering mode picture or a no-filtering mode.

The invention also relates to a device for the decoding of video data, comprising a temporal synthesis circuit for performing a temporal synthesis MCTF filtering, characterized in that said circuit comprises means for performing, for a temporal level and for an update step, a short filtering and, for same temporal level and for a predict step, a long filtering.

The invention consists in a novel framework for recursive MCTF, i.e. producing a temporal pyramid, including the definition of several customized predict and update steps, i.e. filtering modes, to locally tune the temporal decomposition in function of the temporal level and/or the temporal position within the GOF. A filtering mode, among a new extended set of possible filtering modes, can be selected at each elementary lifting step.

Such a tuning consists, for example, in discarding one branch, forward or backward, of the update step. Another alternative consists in applying different update management depending on the temporal level. In the same way, update management can vary within a given temporal level. All these considerations on the update step can be applied on the predict step.

This approach is aimed at obtaining a better trade-off between coding delay, complexity and coding efficiency. The compression rate can be optimized taking into account the implementation cost and/or processing speed.

Other features and advantages of the invention will become clearly apparent in the following description given by way of nonlimiting examples and offered with regard to the appended figures which represent :

- figure 1, an overall architecture of a video coder,
- figure 2, a lifting scheme of Haar filtering,
- figure 3, a Haar filtering with a group of 16 frames,
- figure 4, a lifting implementation of 5/3 filtering,
- figure 5, a 5/3 filtering with a group of 16 frames,
- figure 6, a treillis structure of an elementary lifting step,
- figure 7, a systematic bi-directional predict step, left-hand update step MCTF scheme,
- figure 8, a systematic bi-directional predict step, right-hand update step, MCTF scheme,
- figure 9, a level adaptive MCTF scheme,
- figure 10, a time adaptive MCTF scheme,
- figure 11, a time and level adaptive MCTF scheme.

Let's first consider short temporal filtering, i.e. 2-tap filters, that only applies on pair of frames, such as the so-called "Haar filtering". Note that Haar filters can be interpreted as a 2/2 filter-bank.

If we consider a pair of pictures A and B, the process consists in applying a high pass filter and a low pass filter in order to get a high frequency band picture H and a low frequency band picture L. These two steps correspond in this filtering to equations (1),

$$(1) \quad \begin{cases} H = \dfrac{B - MC_{A \leftarrow B}(A)}{\sqrt{2}} & \text{(Predict Step)} \\ L = \sqrt{2}.A + MC_{A \leftarrow B}^{-1}(H) & \text{(Update Step)} \end{cases}$$

where $MC_{I_1 \leftarrow I_2}$ (F) corresponds to the motion compensation of a frame F, using the motion field estimated between frames $I_1$ and $I_2$.

This process is depicted in figure 2 where pictures A and B are referenced 7 and 8. To get the high frequency band picture H, high-pass frame 9, the motion between picture B and picture A is needed. It corresponds to the backward motion vectors starting from B, A being considered as the reference picture.

To get the low frequency band picture L, low-pass frame 10, the motion between picture A and B is needed. It corresponds to the forward motion vectors starting from A, B being considered as the reference picture. Practically, only one motion field is generally estimated, for instance motion field from B to A, the other being deduced.

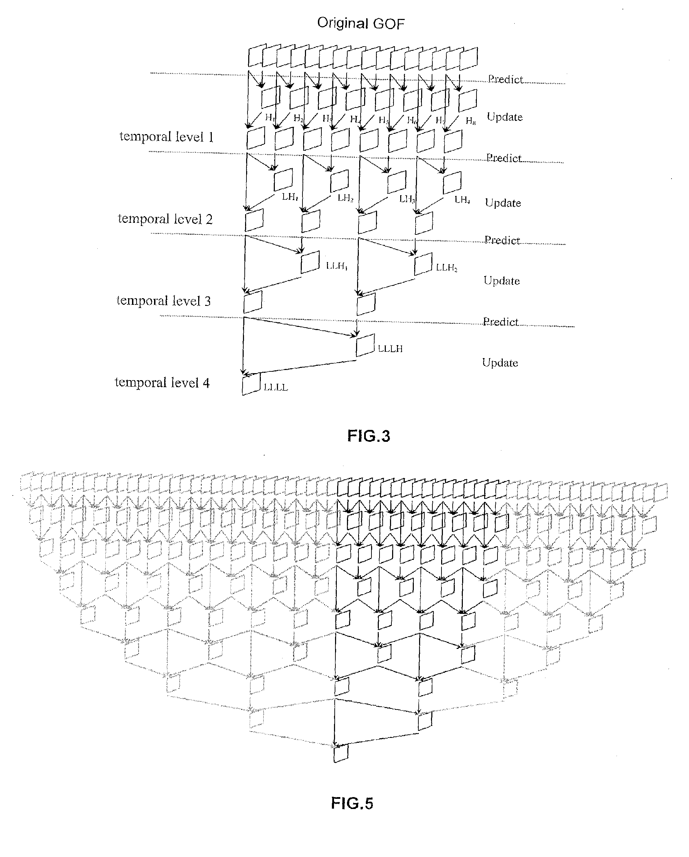

In practice, the input frames are usually gathered into groups of frames called GOF. Figure 3 illustrates an example of Haar filtering with a group of 16 frames.

On this figure, the first line of frames corresponds to the original GOF. The second and third lines of frames correspond to the temporal level 1, the following pairs of lines (4, 5), (6, 7) and (8,9) correspond respectively to the temporal levels 2, 3 and 4.

The application of the "Haar filtering" is performed on each pair of frames in the original GOF, to produce, at temporal level 1, temporal high frequency (H) and low frequency (L) frames. For a given temporal level, the first line of the pair represents the frames obtained through a predict step, the second line represents the frames obtained through an update step, following the predict step. In other words, the first line represents the temporal high frequency frames and the second line represents the temporal low frequency frames.

High frequency frames at a temporal level n are obtained by processing temporal low frequency frames at level n-1, through a predict step. For n=1, the low frequency frames are the original frames.

Low frequency frames at a temporal level n are obtained by processing temporal low frequency frames at level n-1 and temporal high frequency frames obtained at level n, through an update step. For n=1, the low frequency frames are the original frames.

The frames transmitted by the temporal analysis circuit 1 are the temporal low frequency frame from the lowest temporal level, LLLL at level 4, and the temporal high frequency frames at each temporal level, LLLH at level 4, $LLH_1$ and $LLH_2$ at level 3, $LH_1$ to $LH_4$ at level 2 and $H_1$ to $H_8$ at level 1, a total of 16 frames.

Let's now consider longer filter-bank, such as the currently used 5/3 filter-bank.

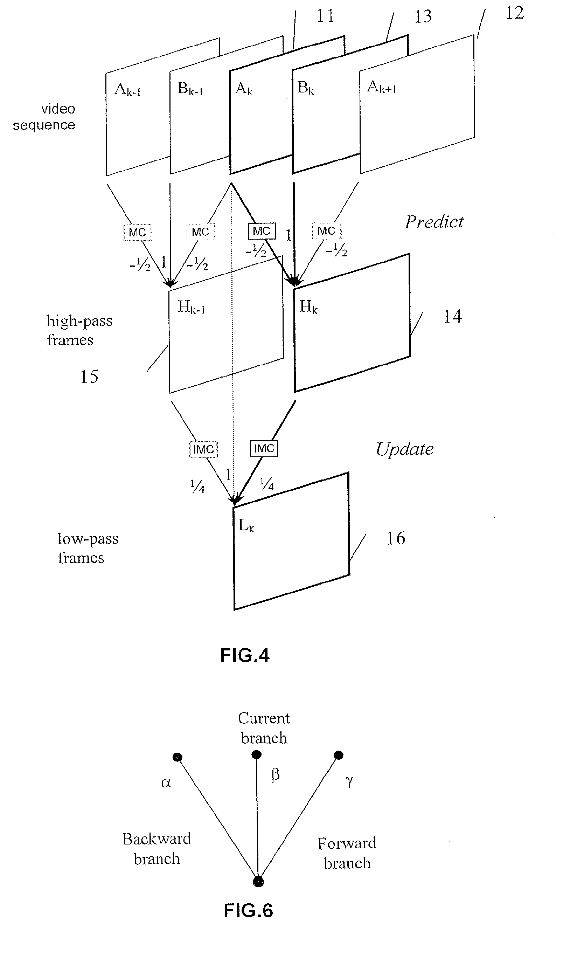

The 5/3 filter-bank consists in one 5-tap low band filter coupled with one 3-tap high-band filter. Such a filter allows to better capture temporal redundancy on the temporal axis, since it is applied on a longer temporal window. Its lifting implementation corresponds to equations (2), and is depicted in figure 4.

$$(2) \quad \begin{cases} H_k = B_k - \dfrac{MC_{A_k \leftarrow B_k}(A_k) + MC_{B_k \rightarrow A_{k+1}}(A_{k+1})}{2} & \text{(Predict Step)} \\ L_k = A_k + \dfrac{MC_{B_{k-1} \rightarrow A_k}^{-1}(H_{k-1}) + MC_{A_k \leftarrow B_k}^{-1}(H_k)}{4} & \text{(Update Step)} \end{cases}$$

We denote $A_k$, and $A_{k+1}$, references 11 and 12, the *k*-th and *k+1*-th even frames in the video sequence or in the GOF, and $B_k$, reference 13, the *k*-th odd frame in the video sequence or in the GOF.

Once again, $MC_{I_1 \leftarrow I_2}$ (F) corresponds to the motion compensation of a frame F using the backward motion field estimated between frames $I_1$ and $I_2$, and $MC_{I_1 \rightarrow I_2}$ (F) corresponds to the motion compensation of a frame F using the forward motion field estimated between frames $I_1$ and $I_2$.

As shown on figure 4, the predict step calculates the high-pass frame $H_k$, reference 14, through frame $B_k$ and motion compensated frames $A_k$ and $A_{k+1}$

The update step calculates the low-pass frame $L_k$, reference 16, through frame $A_k$, reference 11, and motion compensated frames $H_{k-1}$ and $H_k$, references 15 and 14.

We note that both the predict step and the update step have 3-taps unlike in the Haar form.

Practically, the input frames are usually gathered into groups of frames or GOFs, e.g. 16 frames, and the filtering process is applied recursively. The corresponding temporal structure is shown figure 5. A current GOF and its processing are represented in bold lines. As explained above, the first line of frames represents the original sequence, the second and third lines represent respectively high frequency frames and low frequency frames corresponding to temporal level 1...

The invention consists in a novel framework for recursive MCTF, i.e. producing a temporal pyramid, including the definition of several customized filtering modes for the predict and update steps, to locally tune the temporal decomposition, e.g. in function of the temporal level and/or the temporal position within the GOF.

Notations

For sake of simplicity, we will omit in the sequel the motion compensation in the filtering equations.

In an extended 5/3 framework, each elementary step, update or predict, is determined by a given set of coefficients.

Let $U$ and $P$ be respectively the update and predict operators: $U=\{\alpha_u;\beta_u;\gamma_u\}$ $P=\{\alpha_p;\beta_p;\gamma_p\}$.

Figure 6 represents a treillis structure of an elementary lifting step. Coefficients $\alpha$, $\beta$, $\gamma$ are respectively allocated to the backward, the current and the forward branch which correspond to a previous frame, a current frame and a next frame.

Using these notations, equations of (2) can be rewritten :

$$\begin{cases} H_k = \alpha_P.A_{k-1} + \beta_P.B_k + \gamma_P.A_k \\ L_k = \alpha_U.H_{k-1} + \beta_U.A_k + \gamma_U.H_k \end{cases}$$

For instance, in classical 5/3 case, whose equations have been shown in (2), the coefficients values are the following :

$$\text{Bi-directional predict or BiP mode: } \begin{cases} \alpha_P = \gamma_P = {}^{-1}\!/_2 \\ \beta_P = 1 \end{cases}$$

$$\text{Bi-directional update or BiU mode: } \begin{cases} \alpha_U = \gamma_U = 1\!/_4 \\ \beta_U = 1 \end{cases}$$

In the sequel, we will consider additionally the following update and predict modes defined by the corresponding sets of coefficients:

$$\text{Right-hand update or RU mode: } \begin{cases} \alpha_U = 0 \\ \beta_U = 1 \\ \gamma_U = 1\!/_2 \end{cases}$$

$$\text{Left-hand update or LU mode: } \begin{cases} \alpha_U = 1\!/_2 \\ \beta_U = 1 \\ \gamma_U = 0 \end{cases}$$

No-update or NU mode: $\begin{cases} \alpha_U = \gamma_U = 0 \\ \beta_U = 1 \end{cases}$

Right-hand predict or RP mode: $\begin{cases} \alpha_P = 0 \\ \beta_P = 1 \\ \gamma_P = -1 \end{cases}$

Left-hand predict or LP mode: $\begin{cases} \alpha_P = -1 \\ \beta_P = 1 \\ \gamma_P = 0 \end{cases}$

No-predict or NP mode: $\begin{cases} \alpha_P = \gamma_P = 0 \\ \beta_P = 1 \end{cases}$

The coefficients presented here don't take into account the possible filters normalization that can be applied.

To be more general, bi-directional predict mode or bi-directional update mode, also named bi-directional filtering mode or long filtering, corresponds to $\alpha$ and $\gamma$ different from 0.

Right-hand predict mode and right-hand update mode, also named right-hand filtering modes, correspond to $\alpha = 0$ and $\gamma$ different from 0.

Left-hand predict mode and left-hand update mode, also named left-hand filtering modes, correspond to $\alpha$ different from 0 and $\gamma = 0$.

No-predict mode and no-update mode, also named no-filtering modes correspond to $\alpha = 0$, $\gamma = 0$.

Right-hand filtering, left-hand filtering or no-filtering mode is considered as short filtering.

We assume that there are L temporal levels in MCTF temporal pyramid.

Instead of using conventional MCTF schemes implementing only bi-directional predict mode BiP, coupled with bi-directional update mode BiU [Woods], or with no-update modes NU [Luo], the process allows the implementation of other modes by extending the set of update and predict modes, the selection being made within the new extended set.

Consequently, a set of possible lifting modes is first defined. For example, a set of update and predict modes, respectively Du and Dp, can be :

$$D_U = \{NU, LU, RU, BiU\}$$

$$D_P = \{NP, RP, LP, BiP\}.$$

These modes are defined by the coefficients $\alpha$, $\beta$, $\gamma$, with their index u or p corresponding to the update or predict mode.

Then, a mode is chosen among these possible modes, at the different nodes of the MCTF temporal pyramid.

The mode is selected, for each elementary lifting step, as a function of the temporal level or the instant t within the level corresponding to this step, or a combination of both. Let $U_{t,l}$ and $P_{t,l}$ be respectively the update and predict steps corresponding to temporal level l and instant t :

$$U_{t,l} = f(t,l) \in D_U$$

$$P_{t,l} = g(t,l) \in D_P$$

In addition, the choice among the different modes can be driven in parallel by a content-based criterion.

For example, bi-directional filtering modes leading to long filtering can be avoided for sequences with numerous scene shots. Bi-directional filtering modes pointing to frames out of a shot, in a GOF, can be forbidden.

The choice can also be driven by application requirements. For example, no-filtering mode or left-hand filtering mode, right-hand filtering mode leading to short filtering can be preferred to bi-directional filtering modes if low delay is required. On the other hand, long filtering allows a better compression rate.

- The mode can be selected, for each elementary lifting step, as a function of the temporal level.

A bi-directional filtering mode can be used for the first levels to make filtering more efficient as long filtering gives a better spectrum separation and consequently more efficient compaction.

For example, the bi-directional update mode is used for the first u lowest temporal levels and the left-hand or right-hand update mode is used for the L — u upper temporal levels.

In combination, the bi-directional predict mode is used for the first p lowest temporal levels, and the left-hand or right-hand predict mode is used for the L-p upper temporal levels.

u and p are positive integers lower than L and can have the same value.

As another example, the left-hand or right-hand update and/or predict mode is replaced by the no-update and/or no-predict mode at the last levels.

By replacing bi-directional filtering modes by right-hand, left-hand or no-filtering modes, and thus by decreasing the number of future frames needed in temporal decomposition, the encoding/decoding delay is reduced, while maximally taking benefit of energy compaction along temporal axis.

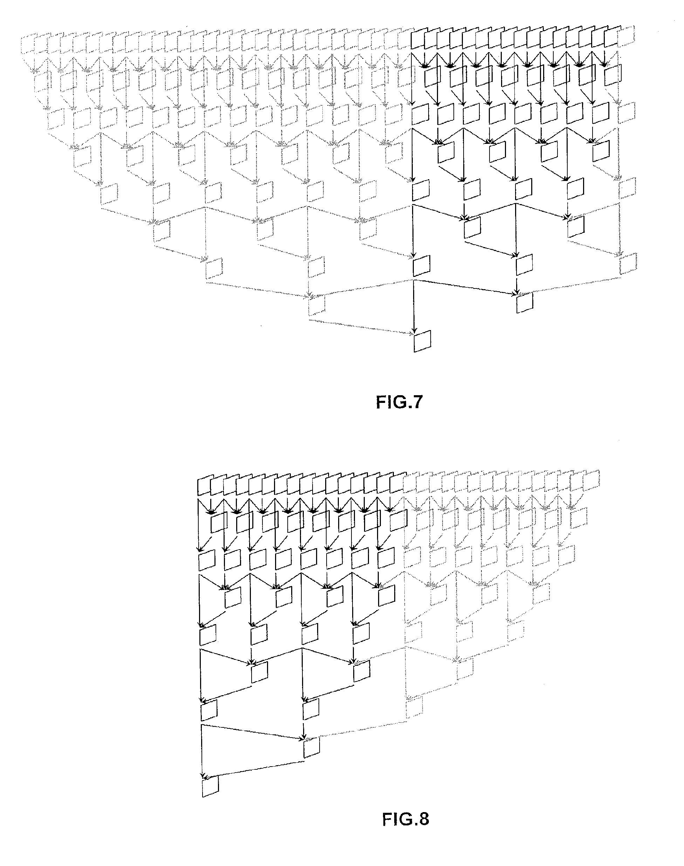

Figures 7 and following represent various MCTF frameworks for a sequence of images, a GOF being emphasized through bolding.

Figure 7 shows a framework corresponding to systematic bi-directional predict mode and systematic left-hand update mode at each of the four temporal levels.

Figure 8 shows a framework with systematic bi-directional predict mode and systematic right-hand update mode at each of the four temporal levels.

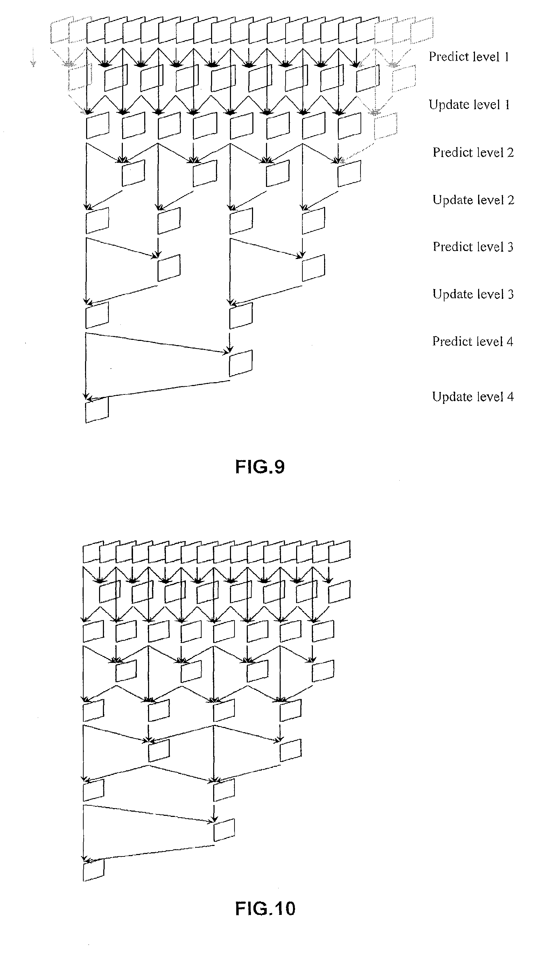

Figure 9 shows a framework corresponding to bi-directional predict modes for temporal levels 1 and 2, left-hand predict modes for temporal levels 3 and 4, bi-directional update mode for temporal level 1 and right-hand update mode for temporal levels 2, 3 and 4.

Bi-directional filtering makes H frames from low frequency levels "more equal to zero" and L frames from low frequency levels "more relevant", more "likely to natural images". That helps the iterative temporal transform on the obtained L frames; motion estimation and motion compensated temporal filtering are more efficient. For the upper levels, as frames become more and more distant, long filtering would fail more and more often, while besides increasing delay.

Concerning the choice between left-hand, right-hand and no-filtering mode, if the latency between frame acquisition and transmission is critical, e.g. in applications involving live encoding, the left-hand filtering can be selected a priori to favor dependence to past frames rather than future frames and to limit the storage of frames. If that latency duration does not matter, e.g. offline encoding, the mode choice can be made a posteriori, for example after a preanalysis of the sequence, using content-based criteria.

- The mode can be selected, for each elementary lifting step, as a function of the time position t.

For example, predict mode is right-hand for the first $i_P$ frames, left-hand for the last $k_P$ last frames, and bi-directional otherwise. In the same way, update mode is right-hand for the first $i_U$ frames, left-hand for the last $k_U$ frames, and bi-directional otherwise.

Thus the framework corresponding to the use of a bi-directional mode can be improved by using this bi-directional mode only for the frames at the center of the group, at the considered level, and by using right-hand and/or left-hand for the frames at the borders. Respecting the same overall delay constraints, it allows to better release the energy compaction at the expense of an improved complexity.

Figure 10 shows a framework which is a time adaptive MCTF scheme. The predict steps systematically consist in bi-directional filtering, except for the last frame of the GOF that is processed with left-hand filtering ($i_P=0$ ; $k_P=1$). The update steps systematically consist in bi-directional filtering, except for the first frame of the GOF that is processed with right-hand filtering ($i_U=1$ ; $k_U=0$).

Thanks to this implementation, independently decodable temporal unit, e.g. GOF, can be obtained.

- The mode can be selected, for each elementary lifting step, as a function of the temporal level I and the time position t.

All kind of combination of the previous modes is possible within each level. For example, at temporal level I, predict/update mode are right-hand for $i_{P,I}/i_{U,I}$ first frames, left-hand for the $k_{P,I}/k_{U,I}$ last frames, and bi-directional otherwise.

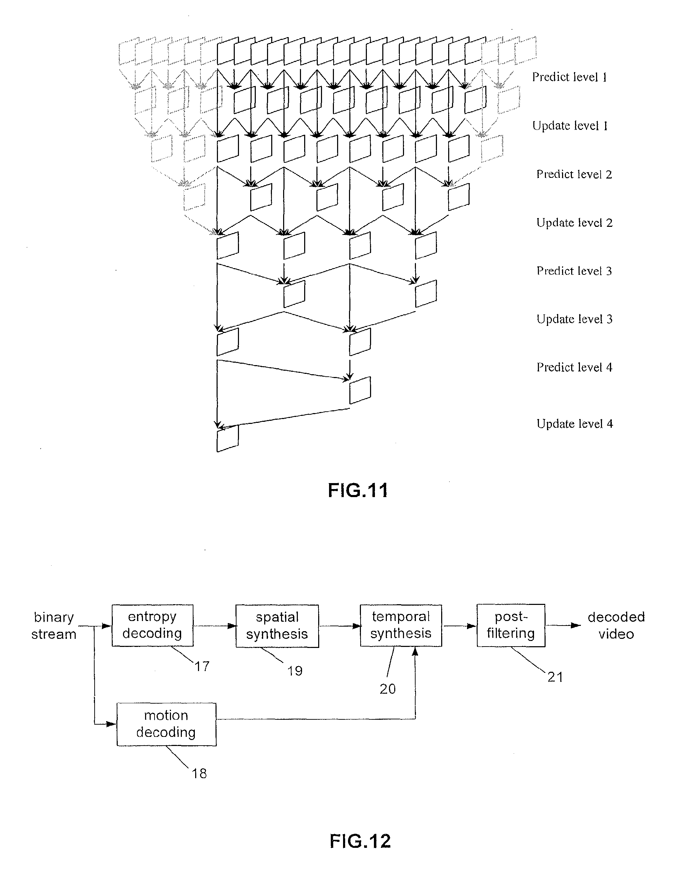

Figure 11 shows such a framework which is a time and level adaptive MCTF scheme, where, for levels $I \in \{1; 2\}$, $i_{P,I} = k_{P,I} = i_{U,I} = k_{U,I} = 0$, and for levels $I \in \{3;4\}$, $i_{P,I} = k_{U,I} = 0$, and $k_{P,I} = i_{U,I} = 1$.

Of course, any state of the art content-based primitives for mode decision can be used to define the global MCTF framework. For example, for a current frame at a temporal level, if a test about the number of pixels connected, through the motion vectors, to a previous or next frame, is implemented, or if correlation is calculated to a previous or next frame, results can be used to decide the filtering mode, for example right-hand mode or left-hand mode if the current frame has more connected pixels or is more correlated respectively to the next frame or previous frame.

The sequence is described as a succession of frames of progressive video. The invention also applies to a succession of interlaced fields, the filtering being implemented on corresponding fields or on reconstructed frames.

In the preceding, 5/3 filter has been taken as an example. The use of longer filters, for example 9/7 filter, which takes into account several previous and next frames, is still in the scope of the invention. In that case, the treillis has more than one backward and one forward branch and the right-hand mode or left-hand mode is replaced by several modes corresponding to one or more branches deleted among the backward or forward branches.

The invention also relates to a coding circuit as the one described in figure 1, with a temporal analysis circuit 1 implementing an algorithm carrying out the described method.

The invention also relates to a decoding process and a decoding circuit.

Figure 12 represents a decoding circuit. The binary stream corresponding to the video sequence coded according to the previously described process is successively transmitted to an entropy decoding circuit 17, a spatial synthesis circuit 19, a temporal synthesis circuit 20 and potentially a post-filtering circuit 21 to provide a decoded video. A motion decoding circuit 18 receives motion information from the entropy decoding circuit and transmits the motion vector fields to the temporal synthesis circuit.

The entropy decoding circuit carries out the inverse operations of the entropy coding circuit. It decodes, among other things, the spatio-temporal wavelet coefficients and the filtering modes transmitted by the coder. Extracted motion information is sent to the motion decoding circuit, which decodes the motion vector fields. These motion fields are transmitted to the temporal synthesis circuit 20 in order to perform the motion-compensated synthesis from the different temporal frequency bands.

The spatial synthesis circuit 19 transmits the temporal wavelet coefficients corresponding to the different temporal sub-bands, to the temporal synthesis circuit. That last circuit reconstructs the images by filtering these sub-bands through temporal synthesis filters. It receives information concerning the algorithms implemented at the coder side, to determine the filtering mode for each elementary lifting step.

The MCTF temporal synthesis filtering implements a synthesis filtering. Frames L and H of an intermediate temporal level are filtered to give a frame L at the previous level through an update step, at least this frame L and frame H are filtered to give an other frame L at this previous level through a predict step. For example, when referring to figure 7, the update step is short filtering as using one H frame, the predict filtering is long filtering as using two L frames.

The post-filtering circuit allows, for example, to decrease artifacts such as block effects.

## Claims

1. Method for coding video data of a sequence of pictures comprising a temporal analysis (1) implementing a motion compensated temporal filtering, said filtering comprising, to get a high frequency band picture H (9, 14) at a temporal level I, a predict step implementing high pass filtering of pictures L (7, 8; 11, 12, 13) of lower temporal level, and, to get a low frequency band picture L (10, 16) at a temporal level I, an update step implementing low pass filtering of pictures H (9; 14, 15) of same level and/or of pictures L (7, 11) of lower temporal level, **characterized in that**, at least for a temporal level, a predict step carries out a long filtering and an update step carries out a short filtering.

2. Method according to claim 1, **characterized in that** the selection among long filtering and short filtering, for predict and up-date steps, is made as a function of the temporal level I.

3. Method according to claim 1, **characterized in that** a long filtering corresponds to a bi-directional filtering mode and a short filtering mode corresponds to a right-hand filtering mode, a left-hand filtering mode picture or a no-filtering mode.

4. Method according to claim 1, **characterized in that** the selection among long filtering and short filtering, for predict and up-date steps, is made as a function of the time position t.

**5.** Method according to claim 3, **characterized in that** the sequence is structured into groups of frames or GOFs and **in that**, for a given temporal level, for the predict and/or the up-date step and for a given GOF, the right-hand mode is selected for the first frame in said GOF, the left-hand mode is selected for the last frame in said GOF, the bi-directional mode is selected for the other frames.

**6.** Method according to claim 5, **characterized in that** the bidirectionnal mode is systematically used at the n lowest levels of the L temporal levels and **in that** the selection is made at the upper temporal levels.

**7.** Method according to claim 1, **characterized in that** short filtering uses a 2-tap filter and long filtering uses a 5/3 filter-bank.

**8.** Device for the coding of video data according to the process of claim 1, comprising a temporal analysis circuit (1) to perform MCTF filtering of pictures, **characterized in that** said circuit comprises means for performing, for a temporal level and for a predict step, a long filtering and, for same temporal level and for an update step, a short filtering.

**9.** Method for decoding video data coded according to the process of claim 1, comprising a temporal synthesis motion compensated temporal filtering (20), **characterized in that**, for a temporal level and for an update step, said filtering carries out a short filtering and, for same temporal level and for a predict step, said filtering carries out a long filtering.

**10.** Method according to claim 9, **characterized in that** a long filtering corresponds to a bi-directional filtering mode and a short filtering mode corresponds to a right-hand filtering mode, a left-hand filtering mode or a no-filtering mode.

**11.** Device for the decoding of video data coded according to the process of claim 1, comprising a temporal synthesis circuit (20) for performing a temporal synthesis MCTF filtering, **characterized in that** said circuit comprises means for performing, for a temporal level and for an update step, a short filtering and, for same temporal level and for a predict step, a long filtering.

```
GCP from        ┌──────────┐     ┌──────────┐     ┌──────────┐     ┌──────────┐
source video    │ temporal │     │ spatial  │     │ entropy  │     │packetizer│──→ stream
       ──────→  │ analysis │ ──→ │ analysis │ ──→ │ coding   │ ──→ │          │
                └──────────┘     └──────────┘     └──────────┘     └──────────┘
                                        1                3                5              6
```

MV

2

MV

4

┌──────────┐                                    ┌──────────┐
│ motion   │                                    │ motion   │
│estimation│ ────────── MV ──────────────────→  │ coding   │
└──────────┘                                    └──────────┘

**FIG. 1**

video
sequence

A   B

7         8

Predict

MC

$-\frac{1}{\sqrt{2}}$   $\frac{1}{\sqrt{2}}$

high-pass
frames

H

9

Update

IMC

$\sqrt{2}$   1

low-pass
frames

L

10

**FIG. 2**

Original GOF

FIG.3

FIG.5

**FIG.4**

**FIG.6**

FIG.7

FIG.8

Predict level 1

Update level 1

Predict level 2

Update level 2

Predict level 3

Update level 3

Predict level 4

Update level 4

**FIG.9**

**FIG.10**

Predict level 1

Update level 1

Predict level 2

Update level 2

Predict level 3

Update level 3

Predict level 4

Update level 4

**FIG.11**

binary stream → entropy decoding (17) → spatial synthesis (19) → temporal synthesis (20) → post-filtering (21) → decoded video

motion decoding (18)

**FIG.12**

15

**European Patent Office**

# EUROPEAN SEARCH REPORT

Application Number

EP 04 29 1291

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ZHAN Y ET AL: "Long temporal filters in lifting schemes for scalable video coding, ISO/IEC JTC1/SC29/WG11 MPEG02/M8680" INTERNATIONAL ORGANIZATION FOR STANDARDIZATION, July 2002 (2002-07), XP002293276 * the whole document * | 1,3-5, 7-11 | H04N7/26 |
| D,X | LIN L ET AL: "Motion compensated lifting wavelet and its application in video coding" 2001 IEEE INTERNATIONAL CONFERENCE ON MULTIMEDIA AND EXPO, 22 August 2001 (2001-08-22), pages 481-484, XP010661850 * Paragraph [2.1 Motion compensated lifting wavelet] * | 1,3,8-11 | |
| D,A | GOLWELKAR A ET AL: "Motion compensated temporal filtering using longer filters, ISO/IEC JTC1/SC29/WG11 MPEG2002/M9280" INTERNATIONAL ORGANISATION FOR STANDARDISATION, December 2002 (2002-12), XP002293277 * the whole document * | 1-11 | TECHNICAL FIELDS SEARCHED (Int.Cl.7) H04N |
| A | LUO L ET AL: "Advanced Lifting-Based Motion-Threading (MTh) Technique for the 3D Wavelet Video Coding" VISUAL COMMUNICATIONS AND IMAGE PROCESSING 2003, PROCEEDINGS OF THE SPIE, 2003, pages 707-718, XP002293278 * the whole document * | 1-11 | |

The present search report has been drawn up for all claims

| Place of search | Date of completion of the search | Examiner |
|---|---|---|
| The Hague | 20 September 2004 | Wahrenberg, A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document